# EUROPÄISCHE PATENTSCHRIFT

(11) **EP 0 391 383 B1**
(45) Veröffentlichungstag und Bekanntmachung des Hinweises auf die Patenterteilung: **06.07.1994**
(21) Anmeldenummer: 90106420.4
(22) Anmeldetag: 04.04.1990
(51) Int. Cl.: H05B 41/29

(54) **Vorschaltgerät für eine Entladungslampe**
Ballast for a discharge lamp
Ballast pour lampe à décharge

(30) Priorität: 04.04.1989 DE 3910900
(43) Veröffentlichungstag der Anmeldung: 10.10.1990
(73) Patentinhaber: Zumtobel Aktiengesellschaft, A-6850 Dornbirn (AT)
(72) Erfinder: Luger, Siegfried, A-6850 Dornbirn (AT)
(74) Vertreter: Schmidt-Evers, Jürgen, Dipl.-Ing.

(56) Entgegenhaltungen:
- EP-A- 0 241 279
- DE-A- 3 338 464
- JP-A-61 144 000
- US-A- 4 298 835
- US-A- 4 396 872
- US-A- 4 513 364

## Beschreibung

Die Erfindung betrifft ein Vorschaltgerät für einen Entladungslampe gemäß dem Oberbegriff des Ansprüches 1. Vorschaltgeräte der genannten Art werden zur hochfrequenten Speisung von Gasentladungslamen eingesetzt.

Aus der US-PS 4,298,835 ist ein verbesserter **Gleich**spannungsregler bekannt, der eine erwünschte Temperaturabhängigkeit von 2V/°C in seiner Ausgangs-Gleichspannung aufweist. Ein solcher Spannungsregler ist dort für die Steuerung von APDs (avalanche photodetecors) eingesetzt, wobei Linearisierungsnetzwerke entfallen können. Für die direkte Speisung von Gasentladungslampen sind Gleichspannungen jedoch nicht anwendbar, da eine ungleichmäßige Abnutzung der Elektroden zur frühzeitigen Zerstörung einer Gasentladungslampe führen würde.

Aus der JP-A-61144000 ist ein weiteres Steuergerät für die Reihenschaltung zweier direkt beheizter (Entladungs)-Lampen bekannt. Hierbei findet ein Transformator mit fünf Sekundärwicklungen Einsatz. Vier der fünf Sekundärwicklungen sind über jeweilige Schalter an die vier Heizwendel der zwei in Serie geschalteten Lampen schaltbar. Gleichzeitig mit dem Anlegen der Vorheizspannungen wird die fünfte Sekundärwicklung des Transformators über den - im Betrieb der Lampen in Serie zu diesen liegenden - Kondensator mittels eines weiteren Schalters überbrückt. Der so entstehende Parallel-Resonanzkreis ermöglicht eine hochfrequente Schwingung und ein Vorheizen der Heizwendel der Lampen. Ein Sensor erfaßt die Umgebungstemperatur, die Vorheizzeit der Heizwendel wird in Abhängigkeit von der Umgebungstemperatur verändert. Nach Ablauf der Vorheizzeit und Öffnen der Schalter können die Lampen "warmgestartet" werden. Eine solche Schaltungsanordnung ist aufwendig und der benötigte Transformator aus Gewichtsgründen unerwünscht.

Aus der EP 87303058.9 ist ein gleichstromabgebendes Steuergerät für eine Gasentladungslampe bekannt. Dem regelbaren Gleichstrom-Steuergerät ist ein zweipoliger mechanischer Umschaltkontakt (DPDT) nachgeschaltet, dieser versorgt über einen bifilar gewickelten Transformator eine Gasentladungslampe. Die Zündspannung wird über eine weitere Wicklung des bifilaren Transformators magnetisch eingekoppelt. Ein Temperatursensor in Verbindung mit einem Mikroprozessor erlaubt es den anfänglichen Gleichstrom abhängig von der Temperatur anzuheben um eine schnelle Erwärmung der Lampe dann zu erreichen, wenn ein schonender Betrieb bei tiefen Umgebungstemperaturen ermöglicht werden soll. Nach der Aufwärmphase ist es Aufgabe des Temperatursensors nunmehr den Gleichstrom von der Lampen-Steuerschaltung so zu beeinflussen, daß die gemessene Lampentemperatur auf einen vorgegebenen konstanten Wert verbleibt.

Schließlich war es bisher üblich bei Vorschaltgeräten der eingangs genannten Art dann, wenn keine Temperaturabhängigkeit vorgesehen war, die Zündspannung unabhängig von der Temperatur so hoch zu wählen, daß über den gesamten Betriebs-Temperaturbereich, in dem die Lampe arbeiten soll, stets sicheres Zünden gewährleistet ist.

Es wurde nunmehr festgestellt, daß die Lebensdauer von Entladungslampen umso kürzer ist, je höher die verwendeten Zündspannungen sind. Das bedeutet andererseits, daß die Lebensdauer von Entladungslampen verlängert werden kann, wenn die Zündspannung in Abhängigkeit von der Temperatur so niedrig wie möglich gewählt wird, zumindest aber so hoch, daß stets noch ein sicheres Zünden gewährleistet wird.

Im Rahmen dieser Temperaturuntersuchungen wurde auch festgestellt, daß die Lebensdauer einer indirekt oder direkt beheizten Entladungslampen dadurch verlängert werden kann, daß bei unterschiedlichen Temperaturen entsprechend andere Vorheizspannungen verwendet werden, deren Werte experimentell ermittelt werden können.

Gemäß einer älteren, jedoch nicht vorveröffentlichten europäischen Patentanmeldung 88 106 325.9 der Anmelderin, zu der Deutschland benannt worden ist, wird eine von der Temperatur unabhängige Zündspannung durch einen Sollwert-Geber festgelegt, der den Sollwert einem Regler zuführt, welcher seinerseits ein Istwert-Signal von einem zu der Lampe parallel geschalteten Spannungsteiler erhält. Der Regler erzeugt ein Regelsignal, welches einem Rechner zugeführt wird, der seinerseits ein Steuersignal zur Frequenzsteuerung des Wechselspannungsgenerators erzeugt. Der Sollwert-Geber erzeugt ferner einen Sollwert für die Vorheizspannung, die dann in gleicher Weise wie die Zündspannung geregelt wird. Der Rechner arbeitet nach einem bestimmten Zeitprogramm. Während einer Vorwärmphase steuert er die Frequenz des Wechselspannungsgenerators, der aus einem an das Wechselstromnetz anschließbaren Gleichrichter und einem diesem nachgeschalteten Wechselrichter besteht so, daß der Wechselrichter eine Ausgangsspannung mit hoher Frequenz erzeugt. Dem Lastkreis des Wechselrichters liegt eine Serienschaltung aus einer Drossel und einem Kondensator zugrunde, dem die Lampe parallel geschaltet ist. Die während der Vorwärmphase erzeugte Frequenz ist so hoch, daß durch die Heizdrähte der Lampe ein Heizstrom fließt, wobei an dem Kondensator jedoch noch keine Resonanz-Spannungsüberhöhung auftritt, die eine Zündung der Lampe zur Folge hätte. Die Frequenz des Wechselrichters während dieser Vorwärmphase wird durch den feststehenden Sollwert für die Vorheizung bestimmt. Nach dem von dem Rechner bestimmten Ende der Vorwärmphase wird die Frequenz des Wechselrichters in Richtung auf die Resonanzfrequenz hin abgesenkt, die im wesentlichen durch die Drossel und den Kondensator bestimmt ist. Dadurch tritt an dem Kondensator eine Resonanz-Spannungsüberhöhung auf, die zur Zündung der Röhre führt. Die Frequenz, welche die Zündspannung der Röhre bestimmt, ist durch den oben erwähnten feststehenden Zündspannungs-Sollwert vorgegeben.

Nach der DE-OS 33 38 464 ist es auch bekannt, statt oder außer der Frequenz des Ausgangssignals des Wechselrichters auch dessen Tastverhältnis zu ändern, um die Lampe bei bestimmten Kennwerten zu betreiben.

Aus der US-A- 4 396 872 ist ein Vorschaltgerät für Hochleistungs-Gasentladungslampen beschrieben, das zum Einsatz in Gewächshäusern vorgesehen ist. Die Schaltung dieses Gerätes ist derart ausgelegt, daß die sich im Gewächshaus befindenden Pflanzen möglichst schnell den optimalen Umgebungsbedingungen ausgesetzt sind. Hierfür wird das Licht und die Temperatur im Gewächshaus und auch das Licht und die Temperatur einer jeden Lampe überwacht. Da in der Warmlaufphase der Lampe nicht die gewünschten Licht- und Temperaturverhältnisse für die Pflanzen erzielbar sind, muß die Lampe möglichst schnell von der Warmlaufphase in die Normalbetriebsphase überführt werden. Dies erfolgt über die Gestaltung des Tastverhältnisses des Lampenstromes. Sobald die Lampe eine ausreichende Temperatur erreicht hat, was über entsprechende Sensoren ermittelt wird, wird das Tastverhältnis auf einen dem Normalbetrieb entsprechenden Wert eingestellt.

Der Erfindung liegt die Aufgabe zugrunde, die Lebensdauer der Lampe zu verlängern.

Die Aufgabe ist erfindungsgemäß durch das im Kennzeichen des Anspruchs 1 angegebene Merkmal gelöst.

Grundgedanke der Erfindung ist also, die Kennwerte der Lampe, wie beispielsweise die Vorheizspannung und/oder die Zündspannung abhängig von der Umgebungstemperatur zu machen, derart, daß eine möglichst schonende Behandlung der Lampe sowie der peripheren Bauelemente gewährleistet wird.

Eine einfache Möglichkeit zur Realisierung der vorstehend beschriebenen Lösung kann bei dem Vorschaltgerät nach der älteren europäischen Patentanmeldung 88 106 325.9 der Anmelderin darin bestehen, daß dem Istwert-Geber für die Lampenspannung der dort als zu der Lampe parallel geschaltete Spannungsteiler ausgebildet ist, mindestens ein temperaturabhängiges Bauelement hinzugefügt wird, welches so wirkt, daß die Istwert-Spannung der Lampe ausgehend von einer Normaltemperatur, zumindest zu niedrigeren Temperaturen hin erniedrigt wird.

Eine andere Realisierung der erfindungsgemäßen Lösung kann darin bestehen, daß dem Sollwert-Geber von einem Temperatur-Sensor ein Temperatursignal zugeführt wird, und daß im Sollwert-Geber oder im Speicher eines mit ihm verbundenen Rechners verschiedene von der Temperatur abhängige Sollwerte abgespeichert sind, die entsprechend dem zugeführten Temperatursignal zur Abgabe durch den Sollwert-Geber bzw. den Rechner aufgerufen werden.

Eine solche temperaturabhängige Sollwert-Nachführung kann sowohl für die Vorheiz-Spannung/Strom als auch für die Zündspannung zu einer kontinuierlichen Funktion zusammengefaßt werden. Besonders vorteilhaft hat sich als Funktion für die Zündspannung (die zwischen den beheizten oder unbeheizten Elektroden im Augenblick des Zündens der Röhre anliegende Spannung) in Abhängigkeit von der Temperatur ein Verlauf ergeben, der bei ca. +30° ein Minimum aufweist und zu höheren und niederen Temperaturen hin ansteigt. Als vorteilhafter Verlauf für die Vorheizspannung/Strom einer direkt oder indirekt beheizten Gasentladungslampe hat sich ein Verlauf ergeben, der bis ca. 30° einen konstanten, vorgegebenen Wert aufweist und oberhalb von +30° monoton fällt (beispielsweise hyperbolisch oder e-funktionsmäßig) so, daß zwar die Vorheizspannung mit steigender Umgebungstemperatur fällt, jedoch auch bei höheren Umgebungstemperaturen nie unter einen vorgegebenen Minimalwert fällt.

Die Abhängigkeit der Zündspannung und der Vorheizspannung/Strom kann für indirekt oder direkt beheizte Gasentladungslampen (mit Warmstart) gemeinsam eingesetzt werden. Wenn unbeheizte Gasentladungslampen (Kaltstart) eingesetzt werden, so entfällt die Abhängigkeit Vorheizspannung von der Umgebungstemperatur. Hierbei wird nur die Zündspannung in Abhängigkeit von der Umgebungstemperatur geregelt bzw. gesteuert.

Umgebungstemperatur im Sinne der Erfindung kann zum einem die tatsächliche Außentemperatur, d.h. die Lufttemperatur in determiniertem Abstand von der Entladungslampe sein. Sie kann, wenn die Lampe sich im Betrieb, z.B. aufgrund starker Kapselung oder mangelnder Luftzirkulation, stark erwärmt, auch direkt die Lampentemperatur in nächster Umgebung oder direkt an der Lampe betreffen.

Ausführungsbeispiele der Erfindung werden nachfolgend anhand der Zeichnungen beschrieben.

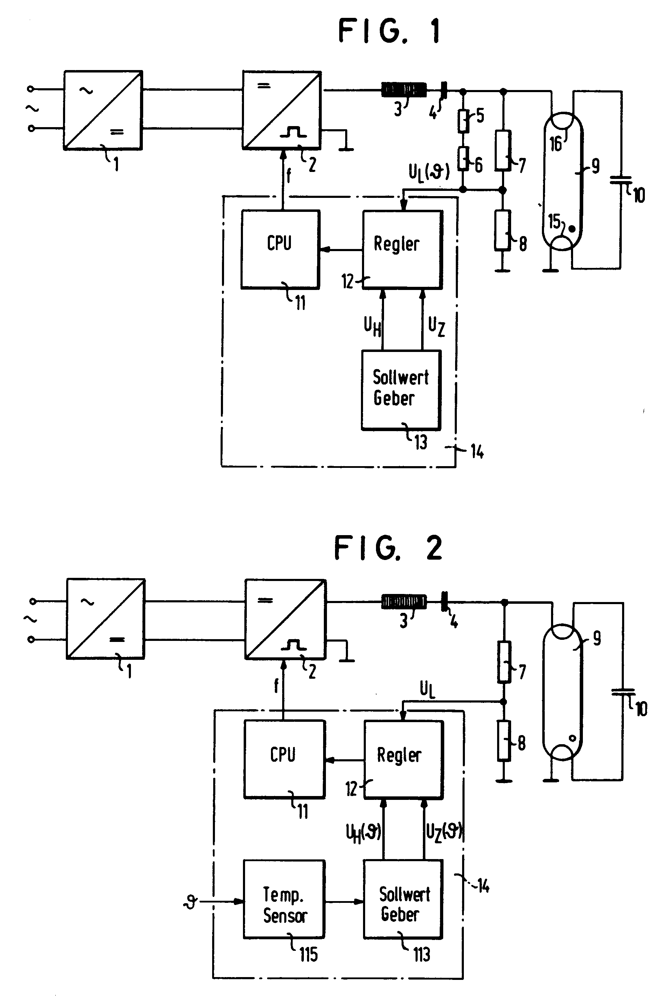

Es zeigen:
- Figur 1: eine erste praktische Ausführungsform
- Figur 2: eine zweite praktische Ausführungsform
Das Vorschaltgerät nach Figur 1 besteht aus einem an das Wechselstromnetz angeschlossenen Gleichrichter 1, dem ein Wechselrichter 2 mit steuerbarer Frequenz nachgeschaltet ist. Der Lastkreis des Wechselrichters 2 ist gebildet von einer Serienschaltung aus einer Drossel 3, einem Kondensator 4 und einem weiteren Kondensator 10. Zu dem weiteren Kondensator 10 ist die Entladungslampe 9 parallel geschaltet. Die Drossel 3 dient zur Begrenzung des Lampenstromes, wenn die Lampe 9 gezündet hat. Der Kondensator 4 dient zur Gleichstromentkoppelung zwischen der Entladungslampe 9 und dem Wechselrichter 2. Die Drossel 3, der Kondensator 4 und der Kondensator 10 bilden einen Reihenresonanzkreis. Da der Kondensator 4 eine wesentlich höhere Kapazität als der Kondensator 10 hat, wird die Resonanzfrequenz des Reihenresonanzkreises im wesentlichen durch die Drossel 3 und den Kondensator 10 bestimmt.

Zu der Lampe 9 ist ein aus zwei Widerständen 7, 8 bestehender Spannungsteiler parallel geschaltet. Vom Mittelabgriff dieses Spannungsteilers 7, 8 wird eine Sollwert-Spannung abgeleitet. Die Sollwert-Spannung wird einem Steuerspannungsteil 14 zugeführt. Dieses enthält einen Sollwertgeber 13. In dem Sollwert-Geber 13 sind ein Sollwert U_{H} für die Vorheizspannung und ein Sollwert U_{Z} für die Zündspannung festgelegt. Diese beiden Sollwerte werden einem Regler 12 zugeführt. Der Regler 12 erhält außerdem die Istwert-Spannung U_{L} (ϑ) . Der Regler 12 erzeugt ein Regelsignal, welches einem Rechner 11 zugeführt wird. Der Rechner 11 erzeugt ein Signal zur Frequenzsteuerung des Wechselrichters 2.

In dem Rechner 11 ist ein Zeitprogramm abgespeichert. Danach steuert der Rechner 11 den Wechselrichter 2 zunächst während einer Vorwärmphase so, daß der Wechselrichter 2 eine Ausgangsspannung mit einer Frequenz erzeugt, die so hoch über der Resonanzfrequenz des Reihenresonanzkreises liegt, daß an dem Kondensator 10 noch keine Resonanz-Spannungsüberhöhung auftritt. Während dieser Vorwärmphase werden lediglich die Heizdrähte 15, 16 der Lampe 9 vorgewärmt. Die Spannung, die über dem Kondensator 10 abfällt und das Vorwärmen der Heizdrähte 15, 16 bestimmt, hängt von der Frequenz des Wechselrichters 2 ab. Diese Frequenz wiederum wird bestimmt durch den Sollwert-Geber 13 abgebenen Sollwert U_{H}. Durch die Vorwärmung wird die Lebendauer der Lampe 9 verlängert.

Gemäß dem im Rechner 11 abgespeicherten Zeitprogramm schließt sich an die Vorwärmphase die Zündphase an. Dazu senkt der Rechner 11 die Frequenz des Wechselrichters 2 in Richtung auf die Resonanzfrequenz des Reihenresonanzkreises ab. Die genaue Frequenz während der Zündphase wird durch den von dem Sollwert-Geber abgebenen Sollwert U_{Z} bestimmt. Die von dem Wechselrichter 2 erzeugte Frequenz bewirkt, daß an dem Kondensator 10 eine Resonanz-Spannungsüberhöhung auftritt. Diese führt zum Zünden der Lampe 9. Die Resonanz-Spannungsüberhöhung ist jedoch nur so hoch gewählt, daß die Lampe 9 bei einer bestimmten Temperatur gerade noch zündet. Um dies zu gewährleisten, ist zu dem Widerstand 7 des Spannungsteilers 7,8 eine Reihenschaltung aus den Widerständen 5 und 6 parallel geschaltet. Der Widerstand ist ein temperaturunabhängiger Widerstand, während dessen Widerstandswert sinkt, wenn die Temperatur erhöht wird. Dadurch wird gewährleistet, daß die Istwert-Spannung U_{L}, die dem Regler 12 zugeführt wird, temperaturabhängig ist. Im vorliegenden Fall wird die Istwert-Spannung U_{L} mit fallender Temperatur erniedrigt. Das hat zur Folge, daß bei fallender Temperatur die Frequenz des Wechselrichters 2 der Resonanzfrequenz weiter angenähert wird, wodurch die Resonanz-Spannungsüberhöhung an dem Kondensator 10 größer wird. Auf diese Weise wird also der Notwendigkeit Rechnung getragen, daß die Lampe 9 bei niedrigeren Temperaturen höhere Zündspannungen braucht, um tatsächlich zu zünden.

Die Ausführungsform nach Figur 2 unterscheidet sich von derjenigen nach Figur 1 dadurch, daß die Sollwert-Spannung U_{L} die von dem von den Widerständen 7, 8 gebildeten Spannungsteiler abgeleitet wird, temperaturunabhängig ist. Statt dessen sind in dem Sollwert-Geber 113 Tabellen bestimmter Kennwerte der Lampe in Abhängigkeit von der Temperatur abgespeichert. Im vorliegenden Fall sind dies die Vorheizspannung U_{H} (ϑ) und die Zündspannung U_{Z} (ϑ). Dem Sollwert-Geber 113 wird von einem Temperatursensor 115 ein Temperatursignal zugeführt, welches die in der aktuellen Temperatur entsprechenden Tabellenwert dem Sollwert-Geber 113 zur Abgabe an den Regler 12 aufruft. Es liegt auf der Hand, daß bei dieser Ausführungsform der Temperaturabhängigkeit der Kennwerte der Lampe, die kein lineares Verhalten zeigen, besser Rechnung getragen werden kann als bei der Ausführungsform nach Figur 1.

## Patentansprüche

1. Vorschaltgerät für eine Entladungslampe (9), mit einem Wechselspannungsgenerator (2), in dessen Lastkreis eine Serienschaltung aus mindestens einer Reaktanz (3,4) und der Lampe (9) liegt und mit einem Steuerschaltungsteil (14) zur Steuerung der Frequenz und/oder des Tastverhältnisses des Ausgangssignals des Wechselspannungsgenerators (2),
**dadurch gekennzeichnet,**
daß der Steuerschaltungsteil (14) die die Kennwerte für die Lampe (9) bestimmenden Frequenzen, wie die die Vorheizspannung und/oder die die Zündspannung für die Lampe bestimmende Frequenz, und/oder entsprechende Tastverhältnisse in Abhängigkeit von der Umgebungstemperatur auswählt und einstellt, so daß die Zündspannung (U_{Z}) in Abhängigkeit von der Lampen- bzw. Umgebungstemperatur (ϑ) bei einer vorgegebenen, lampentypabhängigen ersten Kenn-Temperatur, ein Minimum aufweist.

2. Vorschaltgerät nach Anspruch 1,
**gekennzeichnet durch**
einen Sollwert-Geber für bestimte Kennwerte der Lampe, wie dem Lampenstrom oder der Lampenspannung, mit einem Regler, dem die Sollwerte sowie von einem mit der Lampe verbundenen Istwert-Geber Istwerte zugeführt werden und der daraus ein Regelsignal zur Frequenzsteuerung des Wechselspannungsgenerators erzeugt, wobei der Istwert-Geber (5,6,7,8) mindestens ein temperaturabhängiges Bauelement (6) enhält.

3. Vorschaltgerät nach Anspruch 2,
**dadurch gekennzeichnet,**
daß der Istwert-Geber (5,6,7,8) ein die Lampe überbrückender Spannungsteiler ist, der eine der aktuellen Lampenspannung entsprechende Istwert-Spannung, ausgehend von einer Normaltemperatur, liefert, und daß das temperaturabhängige Bauelement (6) so wirkt und angeordnet ist, daß die Istwert-Spannung, ausgehend von einer Normaltemperatur, zumindest zu niedrigeren Temperaturen hin erniedrigt wird.

4. Vorschaltgerät nach Anspruch 1,
**gekennzeichnet durch**
einen Sollwert-Geber für bestimmte Kennwerte, wie dem Lampenstrom oder der Lampenspannung, mit einem Regler, dem die Sollwerte sowie Istwerte von der Lampe zugeführt werden, und der daraus ein Regelsignal zur Frequenzsteuerung des Wechselspannungsgenerators erzeugt, wobei dem Sollwert-Geber (13) von einem Temperatur-Sensor (115) ein Temperatursignal zugeführt wird, und daß im Sollwert-Geber (13) oder im Speicher eines mit ihm verbundenen Rechners (11) verschiedene von der Temperatur abhängige Sollwerte abgespeichert sind, die entsprechend dem zugeführten Temperatursignal zur Abgabe durch den Solwert-Geber (12) bzw. den Rechner (11) aufgerufen werden.

5. Vorschaltgerät für eine Entladungslampe nach einem der vorherstehenden Ansprüche,
**dadurch gekennzeichnet,**
daß der Wechselspannungsgenerator aus einem an das Wechselstromnetz anschließbaren Gleichrichter (1) und einem diesem nachgeschalteten steuerbaren Wechselrichter (2) besteht.

6. Vorschaltgerät nach Anspruch 4,
**dadurch gekennzeichnet,**
daß die verschiedenen von der Temperatur der Lampe (9) oder der Umgebungstemperatur (ϑ) abhängigen Sollwerte für Vorheizspanung (U_{H}), Vorheizstrom (I_{H}) und/oder Zündspannung (U_{Z}) als kontinierliche temperaturabhängige Funktion von dem Sollwertgeber (13) vorgegeben werden.

7. Vorschaltgerät nach Anspruch 1,2, oder 4,
**dadurch gekennzeichnet,**
daß die die Kennwerte für die Lampe (9) bestimmenden Frequenzen lampenspezifisch, wie nennleistungs- lampentyp- oder umgebungsbedingungsabhängig sind.

8. Vorschaltgerät nach Anspruch 1,2, oder 4,
**dadurch gekennzeichnet,**
daß die Zündspannung (U_{Z}), insbesondere bei 30°, ein Minimum aufweist und zu größeren und kleineren Temperaturen hin im wesentlichen symmetrisch verläuft.

9. Vorschaltgerät nach Anspruch 1,2 oder 4,
**dadurch gekennzeichnet**,
daß die Vorheizspannung (U_{H}) in Abhängigkeit von der Umgebungs- bzw. Lampentemperatur (ϑ) ausgehend von einem vorgebbaren konstanten Wert ab einer vorgebbaren zweiten Kenn-Temperatur mit steigender Temperatur fällt und ab einer vorgebbaren dritten Kenn-Temperatur auf einem temperaturunabhängigen Minimalwert verbleibt.

10. Verfahren zum Betreiben und Zünden einer Entladungslampe, die in einen Serien-Resonanzkreis mit einer Induktivität (3) und einer Kapazität (4) schaltbar ist und deren Heizwendel über einen Parallel-Heizkondensator (10) verbunden sind, wobei dem Serien-Resonanzkreis ein in seiner Frequenz und seinem Tastverhältnis variierbares Ausgangssignal zugeführt wird,
**dadurch gekennzeichnet,**
daß der Heizwendelstrom (U_{H}, I_{H}) und die Zündspannung (U_{Z}) in Abhängigkeit von der Lampen- oder Umgebungstemperatur (ϑ) unabhängig voneinander vorgebbar sind indem der Kennwert Vorheizstrom (I_{H}, U_{H}) im wesentlichen über das Tastverhältnis des Ausgangssignales und der Kennwert-Zündspannung (U_{Z}) im wesentlichen über die Frequenz des Ausgangssignales bestimmt wird, so daß die Zündspannung (U_{Z}) in Abhängigkeit von der Lampen- bzw. Umgebungstemperatur (ϑ) bei einer vorgegebenen, lampentyabhängigen ersten Kenn-Temperatur, ein Minimum aufweist.

## Claims

1. Ballast for a discharge lamp (9), having an a.c. voltage generator (2), in the load circuit of which there is a series circuit comprising at least a reactance (3,4) and the lamp (9), and having a control circuit part (14) for controlling the frequency and/or duty factor of the output signal of the a.c. voltage generator (2),
characterised in that
the control circuit part (14) selects and sets the frequencies determining the characteristic values for the lamp (9), such as the frequency determining the preheating voltage and/or the frequency determining the starting voltage for the lamp, and/or corresponding duty factors, in dependence upon the ambient temperature, so that the starting voltage (U_{Z}), dependent upon the lamp or ambient temperature (ϑ), has a minimum value at a pre-selected first characteristic temperature dependent upon the type of lamp.

2. Ballast according to claim 1,
characterised by
a desired value generator for particular characteristic values of the lamp, such as lamp current or lamp voltage, having a controller to which there are supplied the desired values as well as actual values from an actual value sensor connected to the lamp and which generates therefrom a control signal for frequency control of the a.c. voltage generator, wherein the actual value sensor (5,6,7,8) comprises at least one temperature-dependent component (6).

3. Ballast according to claim 2,
characterised in that
the actual value sensor (5,6,7,8) is a voltage divider which bridges the lamp and which delivers an actual value voltage corresponding to the actual lamp voltage, starting from a normal temperature, and in that the temperature-dependent component (6) acts and is arranged so that the actual value voltage, starting from a normal temperature, is decreased, at least towards lower temperatures.

4. Ballast according to claim 1,
characterised by
a desired value generator for particular characteristic values, such as lamp current or lamp voltage, having a controller to which there are supplied the desired values as well as the actual values from the lamp and which generates therefrom a control signal for frequency control of the a.c. voltage generator, wherein a temperature signal is supplied to the desired value generator (13) from a temperature sensor (115), and in that various temperature-dependent desired values are stored in the desired value generator (13) or in the memory of a computer (11) connected thereto, which desired values are called up for delivery by means of the desired value generator (12) or the computer (11), according to the temperature signal supplied.

5. Ballast for a discharge lamp according to one of the preceding claims,
characterised in that
the a.c. voltage generator consists of a rectifier (1) which can be connected to the a.c. mains and a controllable inverter (2) connected downstream of this rectifier.

6. Ballast according to claim 4,
characterised in that
the various desired values, dependent upon the temperature of the lamp (9) or the ambient temperature (ϑ), for the preheating voltage (U_{H}), preheating current (I_{H}) and/or starting voltage (U_{Z}) are provided from the desired value generator (13) as a continuous temperature-dependent function.

7. Ballast according to claim 1, 2 or 4,
characterised in that
the frequencies determining the characteristic values for the lamp (9) are specific to the lamp, being dependent, for example, upon rated power, type of lamp or ambient conditions.

8. Ballast according to claim 1, 2 or 4,
characterised in that
the starting voltage (U_{Z}), in particular at 30°, has a minimum value and takes a substantially symmetrical course towards higher and lower temperatures.

9. Ballast according to claim 1, 2 or 4,
characterised in that
the preheating voltage (U_{H}), dependent upon the ambient or lamp temperature (ϑ), starting from a pre-selectable constant value, drops as the temperature increases from a pre-selectable second characteristic temperature, and from a pre-selectable third characteristic temperature remains at a minimum value independent of temperature.

10. Method for operating and starting a discharge lamp which can be connected in a series resonant circuit to an inductance (3) and a capacitance (4), and the heater coils of which are connected by way of a parallel heating capacitor (10), wherein an output signal, the frequency and duty factor of which can be varied, is supplied to the series resonant circuit,
characterised in that
the heater coil current (U_{H}, I_{H}) and the starting voltage (U_{Z}), dependent upon the lamp temperature or ambient temperature (ϑ), can be pre-selected independently of each other because the characteristic value of the preheating current (I_{H}, U_{H}) is substantially determined by way of the duty factor of the output signal and because the characteristic value of the starting voltage (U_{Z}) is substantially determined by way of the frequency of the output signal, so that the starting voltage (U_{Z}), dependent upon the lamp or ambient temperature (ϑ), has a minimum value at a selected first characteristic temperature dependent upon the type of lamp.

## Revendications

1. Ballast pour une lampe à décharge (9), comportant un générateur de tension alternative (2) dont le circuit de charge comprend un circuit série formé d'au moins une réactance (3, 4) et de la lampe (9) ainsi qu'une partie circuit de commande (14) pour la commande de la fréquence et/ou du rapport cyclique du signal de sortie du générateur de tension alternative (2),
caractérisé par le fait que
la partie circuit de commande (14) sélectionne et règle en fonction de la température ambiante les fréquences qui déterminent les caractéristiques de la lampe (9), telles que la fréquence déterminant la tension de préchauffage et/ou la fréquence déterminant la tension d'amorçage et/ou les rapports cycliques, de telle sorte que, pour une température caractéristique prédéterminée qui dépend du type de la lampe, la tension d'amorçage (U_{Z}) présente un minimum en fonction de la température de la lampe et de la température ambiante (ϑ).

2. Ballast selon la revendication 1, caractérisé par
un transmetteur de valeurs de consigne pour certaines valeurs caractéristiques de la lampe, telles que le courant de lampe ou la tension de lampe, et comportant un dispositif de réglage qui reçoit les valeurs de consigne ainsi que des valeurs effectives provenant d'un capteur de valeurs effectives relié à la lampe et qui, sur la base de ces valeurs, produit un signal de réglage aux fins de commander la fréquence du générateur de tension alternative, le capteur de valeurs effectives (5, 6, 7, 8) comportant au moins un composant (6) qui réagit en fonction de la température.

3. Ballast selon la revendication 2, caractérisé par le fait
que le capteur de valeurs effectives (5, 6, 7, 8) est un diviseur de tension qui shunte la lampe et qui, à partir d'une température normale, fournit une tension effective qui correspond à la tension instantanée de la lampe et par le fait que le composant (6) sensible à la température agit et est disposé de manière telle que la tension effective est abaissée depuis une température normale pour obtenir des températures plus faibles.

4. Ballast selon la revendication 1, caractérisé par
un transmetteur de valeurs de consigne pour certaines valeurs caractéristiques telles que le courant de lampe ou la tension de lampe et comportant un dispositif de réglage qui reçoit les valeurs de consigne et des valeurs effectives en provenance de la lampe et qui, à partir de ces valeurs, produit un signal de réglage aux fins de commander la fréquence du générateur de tension alternative, un signal de température émis par un capteur de température (115) étant transmis au transmetteur de valeurs de consigne (13) et par le fait que différentes valeurs de consigne en fonction de la température sont stockées dans le transmetteur de valeurs de consigne (13) ou dans la mémoire d'un calculateur (11) relié à celui-ci, lesquelles valeurs de consigne, en fonction du signal de température transmis, sont appelées aux fins de délivrance par le transmetteur de valeurs de consigne (13) ou le calculateur (11).

5. Ballast pour un lampe à décharge selon l'une des revendications précédentes, caractérisé par le fait
que le générateur de tension alternative se compose d'un redresseur (1) qui est connecté au réseau électrique alternatif et d'un onduleur (2) placé à la suite de celui-ci.

6. Ballast selon la revendication 4, caractérisé par le fait
que les différentes valeurs de consigne qui dépendent de la température de la lampe (9) ou de la température ambiante (ϑ) pour la tension de préchauffage (U_{H}), le courant de préchauffage (I_{H}) et/ou la tension d'amorçage (U_{Z}) sont indiquées par le transmetteur de valeurs de consigne (13) sous forme de fonction continue dépendant de la température.

7. Ballast selon la revendication 1, 2 ou 4, caractérisé par le fait que les fréquences qui déterminent les caractéristiques de la lampe (9) sont spécifiques à la lampe et dépendent entre autre de la puissance nominale, du type de la lampe ou des conditions environnantes.

8. Ballast selon la revendication 1, 2 ou 4, caractérisé par le fait que la tension d'amorçage (U_{Z}) présente un minimum, notamment pour 30°, et évolue de manière sensiblement symétrique lorsque les température sont plus élevées ou plus faibles.

9. Ballast selon la revendication 1, 2 ou 4, caractérisé par le fait qu' à partir d'une deuxième température caractéristique prédéterminée, la tension de préchauffage (U_{H}) diminue en fonction de la température ambiante voire de la température de la lampe (ϑ), depuis une valeur constante prédéterminée lorsque la température croît et à partir d'une troisième température caractéristique prédéterminée se maintient à une valeur minimale dépendant de la température.

10. Procédé pour alimenter et amorcer une lampe à décharge insérée dans un circuit de résonance avec une inductance (3) et une capacité (4) et dont les filaments sont reliés par un condensateur de chauffage (10) en parallèle, un signal de sortie dont la fréquence et le rapport cyclique peuvent varier étant appliqué au circuit de résonance, caractérisé par le fait
que le courant de filament de chauffage (U_{H}, I_{H}) et la tension d'amorçage (U_{Z}) sont prédéterminés indépendamment l'un de l'autre en fonction de la température de la lampe ou de la température ambiante (ϑ), la valeur caractéristique courant de préchauffage (U_{H}, I_{H}) étant essentiellement déterminée par le rapport cyclique du signal de sortie et la valeur caractéristique tension d'amorçage (U_{Z}) étant essentiellement déterminée par la fréquence du signal de sortie de sorte que, pour une première température caractéristique prédéterminée qui dépend du type de la lampe, la tension d'amorçage (U_{Z}) présente un minimum en fonction de la température de la lampe ou de la température ambiante (ϑ).
